# EUROPEAN PATENT SPECIFICATION

(11) **EP 2 012 412 B1**
(45) Date of publication and mention of the grant of the patent: **19.08.2015**
(21) Application number: 07730470.7
(22) Date of filing: 18.04.2007
(51) Int. Cl.: H02K 5/24, F04D 29/66, F04D 25/12

(54) **DAMPING CASING FOR THE MOTOR OF A LAVATORY AND BATH EXTRACTOR**
DÄMPFUNGSGEHÄUSE FÜR DEN MOTOR EINES TOILETTEN-BADEXHAUSTORS
BOÎTIER D'AMORTISSEMENT POUR LE MOTEUR D'UN SYSTÈME D'ASPIRATION DE WC ET SALLE DE BAINS

(30) Priority: 19.04.2006 ES 200600989
(43) Date of publication of application: 07.01.2009
(73) Proprietor: Soler & Palau Ventilation Group, S.L., 08034 Barcelona (ES)
(72) Inventor: PALAU MALLOL, Josep, 17500 Ripoll Gerona (ES)
(74) Representative: Cabinet Plasseraud
(86) International application number: PCT/ES2007/000232
(87) International publication number: WO 2007/118918

(56) References cited:
- EP-A1- 1 816 728
- EP-A2- 1 793 126
- WO-A1-2006/048481
- DE-A1- 4 438 747
- JP-A- 11 234 958
- JP-A- 2000 023 419
- JP-U- 58 046 898
- US-A- 3 323 763
- US-A- 3 941 339
- US-A- 4 997 342

## Description

### Field of the Art

The present invention relates to air extractors, and more specifically to axial flow extractors arranged in lavatories and baths to extract the air, proposing a solution of damping the noise that said appliances produce in their operation, due to the vibration the motor thereof causes. This damping is achieved by means of a support casing for the motor that virtually eliminates the transmission of the vibrations to the outer structure of the appliance.

### State of the Art

In lavatories and baths it is normal to install air extractors, said extractors generally being built into the construction work of the walls or ceilings.

Said extractors are formed by a motor which drives a propeller, this assembly being included inside a covering structure that is referred to as the general body of the extractor, which gives protection and support to the functional assembly, with the drawback that axial, radial and tangential forces are generated when the motor is operating, due to which vibrations are produced that are transmitted to the general body of the extractor, such that they are propagated from the latter to the work of the installation site, causing an annoying noise, especially when said work is usually a ceiling normally manufactured of plasterboard or similar solutions acting as propagators of the noise.

Solutions have been developed to palliate the effect of the vibrations in the mentioned appliances for the purpose of eliminating their noise and the discomfort that they cause, having for that purpose an elastic element between the functional assembly of the appliance and the general body of the extractor, with which a damping reducing the transmission of these vibrations from the motor to the outer structure is achieved.

In this sense, Patent EP 0668650 describes, for example, a fan provided with an element for damping the vibrations that the motor generates, said element being an elastic disc arranged as a joining link, fixed by screws, between the part containing the motor and the general body of the extractor.

The solution of said patent, as well as those that are currently known for the indicated function of damping the vibrations of the motor in axial flow air extractors, use a single damping element between the motor and the outer structure or general body of the extractor, with the drawback that if the material of the damping element is very soft, it fulfils the damping function but does not firmly secure the motor, such that the weight of the latter and the operation inertia can give rise to an inclination of the motor with the propeller, which can cause friction of the propeller against the body of the extractor causing malfunction; however, if the material of the damping element is hard, it secures the motor well, but it is not very effective in damping the vibrations. A damping casing according to the preamble of claim 1 is disclosed in JP S58-046898; an example of motor mountings may be found in US 3,323,763.

### Object of the Invention

According to the invention a solution is proposed for damping the vibrations in these air extractors by means of a casing inside which the motor is secured in advantageous conditions allowing the position of said motor to be kept stable with enough elasticity for the damping of the vibrations to be effective.

The casing proposed to that end consists of an essentially cylindrical rigid body, at least in its inner part, to house the motor of the extractor therein, said body being closed at the ends by means of respective elements in the manner of rubber covers defining at least two structurally rigid concentric parts joined by means of elastic radial ridges, such that the outer concentric part of said elements is joined to the corresponding end edge of the cylindrical body of the casing, the inner concentric part of said elements has a rigid core forming projecting pegs, whereas the motor is secured on the inner concentric part of such elements by means of respective end anchors.

This arrangement secures the motor at both ends by means of respective damping supports on the proposed casing, which casing is joined rigidly to the outer structure or general body of the extractor, such that the end rubber elements of the casing on which the motor is secured provide, by means of their elastic radial ridges, the damping necessary to prevent the transmission of the vibrations from the motor to the outer structure, whereas since there are two supports securing the motor applied at the ends thereof, they ensure a secure support preventing the inclinations of the motor with the propeller and therefore perfect operating conditions are obtained.

The end elements of the casing for housing and securing the motor can be independent of the body of the casing and be joined to said body by means of insertion or any solution ensuring a stable assembly; one of said elements or both elements could also, without altering the concept, be joined during manufacture with the body of the casing, which body can in turn be formed by two axially complementary half bodies joined together by any means ensuring that they are secured to one another. According to a preferred embodiment the casing is formed by two equal half bodies joined opposite each other and made of a rigid plastic material. Each half body has a cylindrical shape, open at one of its bases and closed at its other base by the corresponding end rubber element, such that the latter and the rigid half body are a single part made from two materials.

The motor can in turn be secured on the end elements of the casing by means of accessory elements, such as screws or the like, but there is particularly envisaged a solution by means of projecting pegs to be inserted into holes of the structure of the motor, or vice versa, thus obtaining an arrangement which allows for an easy assembly.

For all these reasons, the solution of the invention results from truly advantageous features, its embodiment acquiring its own identity and preferred character in relation to the known arrangements for the function of damping the vibrations in the air extractors for which the application is intended.

### Description of the Drawings

Figure 1 shows a sectional view of a scheme of the conventional formation of an air extractor of the type arranged in lavatories and baths.
Figure 2 is a scheme of the conventional manner of securing for damping the motor of an air extractor, with a single securing element applied at the rear end, according to the current state of the art.
Figure 3 is a scheme of the conventional manner of securing for damping the motor of an air extractor, such as that of Figure 2, but now with a single securing element applied at the front end, in an embodiment also comprised in the state of the art.
Figure 4 is a sectional scheme of the formation of an air extractor according to the invention.
Figure 5 is a scheme of the manner of securing for damping the motor of an air extractor according to the invention, with respective securing elements at the front end and at the rear end.
Figure 6 is an exploded schematic perspective view of the assembly for securing the motor of an extractor according to the invention.
Figure 7 is an exploded perspective view like the previous figure, with one of the end elements of the casing for housing the motor incorporated on the cylindrical body of said casing.
Figure 8 is a perspective view of the casing for housing the motor formed by two complementary half bodies in which the end elements of the casing are incorporated.

### Detailed Description of the Invention

The object of the invention relates to a casing intended for the assembly of the motor in axial flow air extractors to be installed in lavatories and baths, with features that allow securing the motor, defining at the same time a damping quality capable of greatly reducing the transmission of the vibrations from the motor to the outer structure or general body of the air extractor.

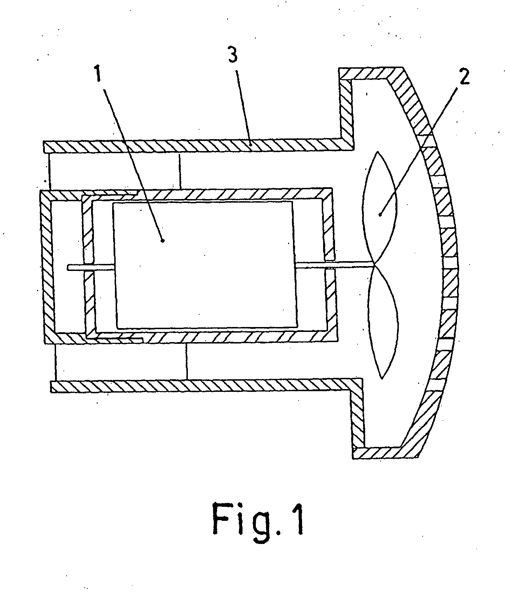

An air extractor appliance of this type is conventionally formed, as depicted in Figure 1, by a motor (1) driving a propeller (2), said assembly being housed inside a covering structure (3) referred to as the general body, by means of which the appliance is secured on the work of a wall or ceiling in the application site.

During use operation, the motor (1) of these appliances produces axial, radial and tangential forces, giving rise to vibrations that are transmitted to the general body (3), causing an annoying noise, which can even be important and resonate on the work of the application site of the appliance, especially taking into account that these appliances are usually installed in the ceiling of a lavatory or bath, which ceiling is usually made of plasterboard or similar solutions acting as propagators of the noise.

To eliminate this drawback of the noise, the motor (1) is usually assembled with a damping securing element, said securing conventionally being carried out by means of an elastic element, by means of which the motor (1) is secured, thus reducing the transmission of the vibrations to the general body.

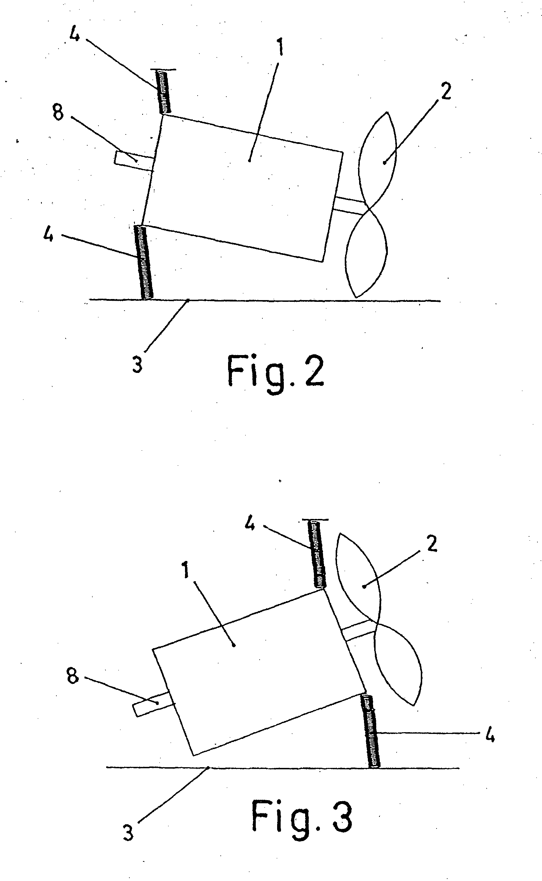

In the known embodiments depicted in the schemes of Figures 2 and 3, the motor is secured by means of an elastic element (4) in a single area of the motor (1), either in the front part, as in the example of Figure 2, or in the rear part, as in the example of Figure 3, such that if the elastic element (4) is too soft, the motor (1) is not secured very firmly, the position thereof being able to incline with the risk of friction of the propeller (2) on the structure (3), whereas if the elastic element (4) is too hard it is deficient for damping the vibrations .

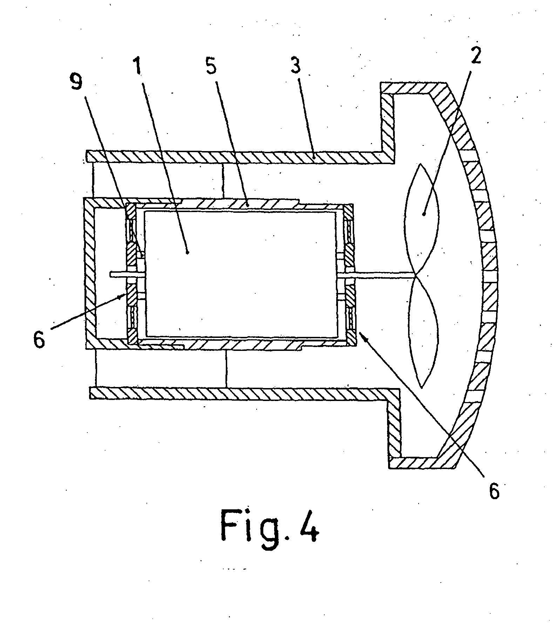

According to the invention the problem is solved with a supporting casing, by means of which the motor (1) of the appliances in question is secured with damping support at the two ends thereof, as depicted in Figure 4, compared to conventional fixing at a single end. It is secured by means of respective elastic, preferably rubber, elements (6) arranged in relation with the two ends of the motor (1).

The casing object of the invention has an essentially cylindrical body (5) of rigid plastic material, on which the two elastic rubber elements (6) are incorporated at the ends in the manner of covers, on which the corresponding motor (1) is secured, which motor is housed during assembly inside the casing, without direct contact with the body (5).

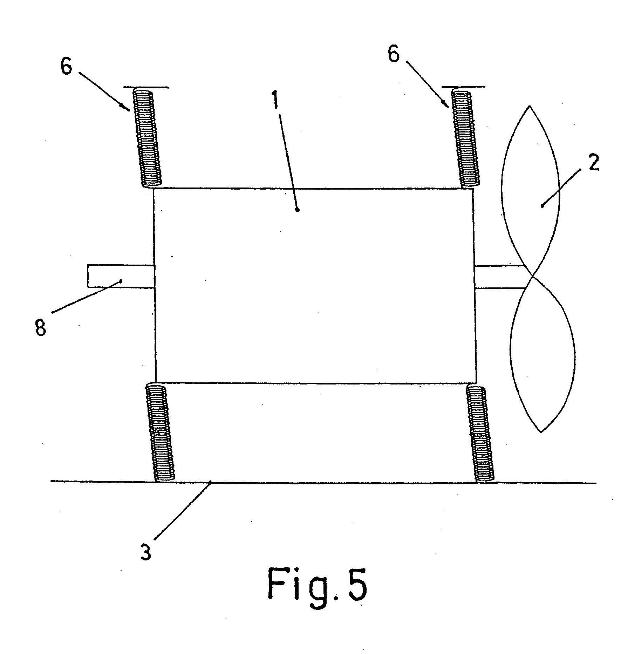

In this way, as can be seen in the scheme of Figure 5, when the two ends of the motor (1) are provided with a damping support, the elastic elements (6) can have suitable elasticity so as to absorb the pulsing moment of the motor (1) and at the same time keep the motor (1) perfectly positioned without inclinations thereof.

Indeed, by having two elastic elements (6) in relation with the two ends of the motor (1), the latter is secured without the possibility of inclining, causing friction of the propeller (2). However, this double securing further allows the elastic elements (6) to be "soft" enough for their elastic condition to absorb the pulsating moment generated by the peaks of the motor (1), which allows virtually eliminating the vibrations transmitted to the surrounding area and thereby eliminating noises.

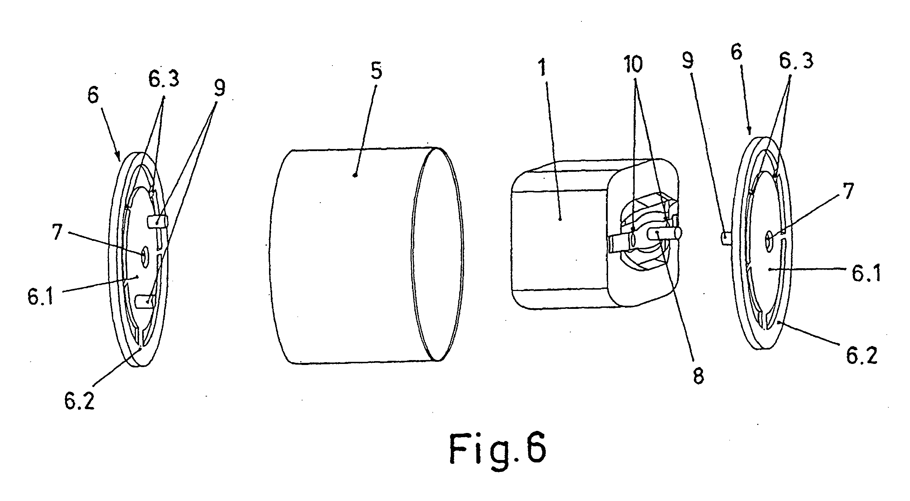

As can be seen in Figure 6, the end elastic elements (6) are a structural shape formed by at least two concentric parts (6.1) and (6.2), joined to one another by means of radial ridges (6.3).

The inner concentric part (6.1) of the mentioned elastic elements (6) has an hole (7) in the centre for the passage of the shaft (8) of the motor (1) in question, further being provided in said inner concentric part (6.1) with projecting pegs (9) for securing the corresponding motor (1) with respect to them by means of inserting the projecting pegs (9) into holes (10) provided for that purpose in the structure of the motor (1).

According to a preferred embodiment, part (6.1) is formed by a core of rigid synthetic material, the same as that of the body (5). This rigid core is embedded in the same elastic rubber material forming the radial ridges (6.3). The pegs (9) are thus formed from the same material as the rigid core of part (6.1) and project from the rubber enclosure covering said rigid core. It has been envisaged that they be two pegs (9) projecting through the inner face of each part (6.1), these two pegs (9) being aligned diametrically opposed so as to be housed in the corresponding holes (10) of the casing of the motor (1).

It is evident that it shall not at all change the essence of the invention if instead of inserting the pegs (9) into the holes (10) of the motor (1) the fixing was carried out through other solutions, such as detachable pegs, screwing, riveting, etc., in short, any solution fixing the inner part (6.1) of the elastic elements (6) to the structure of the motor.

The motor (1) in question is thus firmly and stably secured since it is secured at both ends, thus preventing it from being able to vary its position with significant inclinations, as the scheme of Figure 5 illustrates, while the elastic ridges (6.3) define a damping support preventing the transmission of the vibrations from the motor (1) to the general body (5) of the casing and therefore to the general body (3) of the air extractor appliance.

Within that concept and without altering the object of the invention, the body (5) of the support casing of the motor (1) can be independent and secured in the assembly in any manner on the structure of the general body (3) of the corresponding air extractor appliance, but the body (5) forming the casing can also be an integral part of the structure of the general body (3), in one part molded together as a single part during manufacture.

The elastic rubber elements (6) for closing the ends of the body (5) of the casing can in turn be independent and be joined to the body (5) of the casing by any type of securing coupling, but they also can be joined during manufacture on the mentioned body (5) of the casing without altering the concept with respect to the function of a damping securing of the motor (1) in the air extractor appliances in question, which is the object of the invention.

Indeed, the two end elastic elements (6) can be independent of the body (5) of the casing, as depicted in the example of Figure 6, such that, for example, the elastic elements (6) have a flanging coupled on the edge of the openings of the body (5) by means of a simple insertion that can be complemented with accessory fixing means or even by gluing, welding, etc.

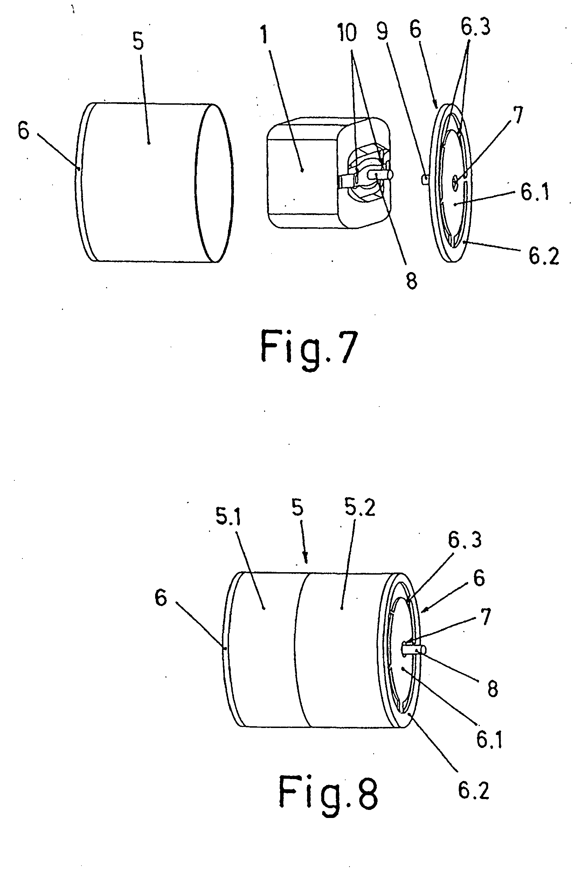

Another solution is that one of the end elastic elements (6) is independent and the other integral with the body (5) of the casing during manufacture, as depicted in the example of Figure 7, or the two end elastic elements (6) are integral with the body (5) of the casing during manufacture, the body (5) of the casing being formed in this case by two complementary half bodies (5.1) and (5.2) susceptible of being joined by any type of coupling, as in the example of Figure 8.

In this case, in the process of manufacturing the half bodies (5.1) and (5.2) of the casing (5) by molding, two different materials are used, one of a rigid plastic nature to define said half bodies (5.1) and (5.2) and the rigid core of part (6.1) and the other of a plastic, rubber type nature, to shape the end elements (6), but each half body (5.1) or (5.2) assembly and its respective elastic element (6) emerges from the molding process as a single part. In this case it has been envisaged that the two half bodies (5.1) and (5.2) are identical and have means shaped in themselves, such as pins and respective housings, to give rise, in their being placed facing one another, to a reciprocal elastic coupling shaping the casing (5) with the motor (1) incorporated inside it.

In other words, in this case, which is the preferred embodiment of the invention, according to what is depicted in Figure 8, the body (5) is defined by two identical half bodies (5.1) and (5.2). The two identical half bodies (5.1) and (5.2) are formed from two materials, one of which one is a rigid plastic material forming the cylindrical body of the half bodies (5.1) and (5.2), as well as the rigid core of part (6.1), and the other one is an elastic, rubber type material covering said rigid core of part (6.1), shaping the elastic ridges (6.3) and also shaping part (6.2).

It has been envisaged that in the opening of the half bodies (5.1) and (5.2) opposite part (6) the half bodies define pins and reciprocal elastic clip fitting formations, such that by arranging the two identical half bodies (5.1) and (5.2) as they appear in Figure 8, when they are moved closer together, said elastic clip fitting is produced, the body (5) being mounted with the motor (1) inside it.

## Claims

1. A damping casing for the motor of a lavatory and bath extractor to secure the motor (1) of the corresponding appliance with a support capable of preventing the vibrations from said motor (1) being transmitted to the general body (3) of the appliance, comprising an essentially cylindrical body (5) closed at the ends by means of elastic elements (6) in the manner of covers, on which elements the motor (1) in question is able to be secured at its two ends, said body being adapted to house said motor (1) inside the body (5), said elements (6) forming supports of an elastic nature vis-à-vis the two ends of the motor (1), which is adapted to absorb the pulsating moment of the motor (1), **characterized in that** the elastic elements (6) have a structural assembly formed by at least two concentric parts (6.1, 6.2), joined together by means of ridges (6.3), the outer concentric part (6.2) being secured on the body (5) of the casing, whereas the motor (1) in question is able to be secured on the inner concentric part (6.1), wherein the inner concentric part (6.1) of the elastic elements (6) has a rigid core forming projecting pegs (9) with which the motor (1) in question is able to be secured by means of insertion in the holes (10) of the structure of the motor (1).

2. The damping casing for the motor of a lavatory and bath extractor according to claim 1, **characterized in that** the body (5) is formed by two complementary half bodies (5.1) and (5.2), joined together in a coupling assembly opposite each other, and on which the respective end elastic elements (6) are incorporated.

3. The damping casing for the motor of a lavatory and bath extractor according to claim 1, at least one of the end elastic elements (6) is independent of the body (5), being incorporated on the latter by means of a coupling assembly, the other element (6) also capable of being independent or of being joined with the structural body (5) during manufacture in a single part.

4. The damping casing for the motor of a lavatory and bath extractor according to claim 1, **characterized in that** the body (5) for housing the motor (1) is adapted to be independent of the general body (3) of the extractor, being incorporated in an integral assembly with respect to said general body (3).

5. The damping casing for the motor of a lavatory and bath extractor according to claim 1, **characterized in that** its body (5) for housing the motor (1) is adapted to form a unitary part with the general body (3) of the extractor, forming a single construction part.

6. An assembly of a motor of a lavatory and bath extractor and a damping casing according to claim 1, the motor (1) being secured at its two ends on elements (6), with the rigid core forming projecting pegs (9), on the inner concentric part (6.1), and being housed inside the body (5)

## Patentansprüche

1. Dämpfungsgehäuse für den Motor eines Toiletten-Bad-Exhaustors zur Befestigung des Motors (1) des entsprechenden Geräts mit einer Stützvorrichtung, die in der Lage ist, die Übertragung der Schwingungen von dem Motor (1) auf den Hauptkörper (3) des Geräts zu verhindern, umfassend einen im Wesentlichen zylindrischen Körper (5), der an den Enden durch elastische Elemente (6) nach Art von Kappen verschlossen ist, wobei der betreffende Motor (1) an seinen beiden Enden an diesen Elementen befestigt werden kann, wobei der Körper so angepasst ist, dass er den Motor (1) in dem Körper (5) beherbergt, wobei die Elemente (6) Stützvorrichtungen elastischer Art gegenüber den beiden Enden des Motors (1) bilden, angepasst für die Absorption des Schwingungsmoments des Motors (1), **dadurch gekennzeichnet, dass** die elastischen Elemente (6) eine Konstruktionsanordnung aufweisen, die durch mindestens zwei konzentrische Teile (6.1, 6.2) gebildet ist, die durch Stege (6.3) zusammengefügt sind, wobei der äußere konzentrische Teil (6.2) an dem Körper (5) des Gehäuses befestigt ist, während der betreffende Motor (1) an dem inneren konzentrischen Teil (6.1) befestigt werden kann, wobei der innere konzentrische Teil (6.1) der elastischen Elemente (6) einen starren Kern hat, der vorspringende Stifte (9) bildet, mit denen der betreffende Motor (1) durch Einführen in die Löcher (10) der Struktur des Motors (1) befestigt werden kann.

2. Dämpfungsgehäuse für den Motor eines Toiletten-Bad-Exhaustors nach Anspruch 1, **dadurch gekennzeichnet, dass** der Körper (5) durch zwei komplementäre Halbkörper (5.1) und (5.2) gebildet ist, die einander gegenüberliegend in einer Kupplungsbaugruppe zusammengefügt sind und in die die jeweiligen elastischen Endelemente (6) integriert sind.

3. Dämpfungsgehäuse für den Motor eines Toiletten-Bad-Exhaustors nach Anspruch 1, wobei mindestens eines der elastischen Endelemente (6) von dem Körper (5) unabhängig ist und in Letzteren mittels einer Kupplungsbaugruppe integriert ist und das andere Element (6) auch unabhängig sein oder während der Fertigung mit dem Konstruktionskörper (5) zu einem einzigen Stück zusammengefügt werden kann.

4. Dämpfungsgehäuse für den Motor eines Toiletten-Bad-Exhaustors nach Anspruch 1, **dadurch gekennzeichnet, dass** der Körper (5) zum Beherbergen des Motors (1) so angepasst ist, dass er von dem Hauptkörper (3) des Exhaustors unabhängig ist, integriert in eine integrale Baugruppe mit dem Hauptkörper (3).

5. Dämpfungsgehäuse für den Motor eines Toiletten-Bad-Exhaustors nach Anspruch 1, **dadurch gekennzeichnet, dass** sein Körper (5) zum Beherbergen des Motors (1) so angepasst ist, dass er unter Bildung eines einzigen Bauteils ein einheitliches Teil mit dem Hauptkörper (3) des Exhaustors bildet.

6. Baugruppe eines Motors eines Toiletten-Bad-Exhaustors und eines Dämpfungsgehäuses nach Anspruch 1, wobei der Motor (1) an seinen beiden Enden an Elementen (6) befestigt ist, wobei der starre Kern vorspringende Stifte (9) auf dem inneren konzentrischen Teil (6.1) bildet, und in dem Körper (5) beherbergt ist.

## Revendications

1. Boîtier amortisseur pour le moteur d'un ventilateur d'extraction pour toilettes et salle de bain pour fixer le moteur (1) de l'appareil correspondant avec un support capable d'empêcher les vibrations dudit moteur (1) d'être transmises au corps général (3) de l'appareil, comprenant un corps essentiellement cylindrique (5) fermé aux extrémités au moyen d'éléments élastiques (6) à la manière de couvercles, sur lesquels éléments le moteur (1) en question est capable d'être fixé au niveau de ses deux extrémités, ledit corps étant adapté pour loger ledit moteur (1) à l'intérieur du corps (5), lesdits éléments (6) formant des supports de nature élastique vis-à-vis des deux extrémités du moteur (1), qui sont adaptés pour absorber le moment pulsatoire du moteur (1), **caractérisé en ce que** les éléments élastiques (6) possèdent un ensemble structurel formé par au moins deux parties concentriques (6.1, 6.2), jointes ensemble au moyen d'arêtes (6.3), la partie concentrique extérieure (6.2) étant fixée sur le corps (5) du boîtier, alors que le moteur (1) en question est capable d'être fixé sur la partie concentrique intérieure (6.1), dans lequel la partie concentrique intérieure (6.1) des éléments élastiques (6) possède un noyau rigide formant des tenons saillants (9) avec lesquels le moteur (1) en question est capable d'être fixé au moyen d'insertion dans les trous (10) de la structure du moteur (1).

2. Boîtier amortisseur pour le moteur d'un ventilateur d'extraction pour toilettes et salle de bain selon la revendication 1, **caractérisé en ce que** le corps (5) est formé par deux demi-corps complémentaires (5.1) et (5.2), joints ensemble en un assemblage d'accouplement l'un en face de l'autre, et sur lesquels les éléments élastiques terminaux respectifs (6) sont incorporés.

3. Boîtier amortisseur pour le moteur d'un ventilateur d'extraction pour toilettes et salle de bain selon la revendication 1, au moins un des éléments élastiques terminaux (6) est indépendant du corps (5), étant incorporé sur ce dernier au moyen d'un assemblage d'accouplement, l'autre élément (6) également capable d'être indépendant ou d'être joint avec le corps structurel (5) durant la fabrication en une seule pièce.

4. Boîtier amortisseur pour le moteur d'un ventilateur d'extraction pour toilettes et salle de bain selon la revendication 1, **caractérisé en ce que** le corps (5) pour loger le moteur (1) est adapté pour être indépendant du corps général (3) du ventilateur d'extraction, étant incorporé dans un assemblage intégrant par rapport audit corps général (3).

5. Boîtier amortisseur pour le moteur d'un ventilateur d'extraction pour toilettes et salle de bain selon la revendication 1, **caractérisé en ce que** son corps (5) pour loger le moteur (1) est adapté pour former une partie unitaire avec le corps général (3) du ventilateur d'extraction, formant une seule partie de construction.

6. Ensemble d'un moteur d'un ventilateur d'extraction pour toilettes et salle de bain et d'un boîtier amortisseur selon la revendication 1, le moteur (1) étant fixé, au niveau de ses deux extrémités sur des éléments (6), avec le noyau rigide formant des tenons saillants (9), sur la partie concentrique intérieure (6.1), et étant logé à l'intérieur du corps (5).
